(19) Europäisches Patentamt
European Patent Office
Office européen des brevets

(11) **EP 1 432 183 B1**

(12) **EUROPEAN PATENT SPECIFICATION**

(45) Date of publication and mention
of the grant of the patent:
**08.05.2013 Bulletin 2013/19**

(51) Int Cl.:
*H04L 12/64* [(2006.01)]   *H04W 72/12* [(2009.01)]
*H04L 12/861* [(2013.01)]

(21) Application number: **03257580.5**

(22) Date of filing: **02.12.2003**

(54) **System and method for downlink packet scheduling in a mobile communication system and recording medium storing a program thereof**

System und Verfahren zur Paketplanung für die Abwärtsrichtung in einem mobilen Kommunikationssystem und Aufzeichnungsmedium zum Speichern des Programms dafür

Système et méthode pour l'ordonnancement des paquets sur la liaison descendante dans un système de communications mobiles et support d'enregistrement enregistrant un programme associé.

(84) Designated Contracting States:
**AT BE BG CH CY CZ DE DK EE ES FI FR GB GR HU IE IT LI LU MC NL PT RO SE SI SK TR**

(30) Priority: **16.12.2002 KR 2002080314**

(43) Date of publication of application:
**23.06.2004 Bulletin 2004/26**

(73) Proprietor: **Electronics and Telecommunications Research
Institute
Daejeon 305-350 (KR)**

(72) Inventors:
• **Kim, Dong-Hoi
Seoul (KR)**
• **Ryu, Byung-Han
Daejeon city (KR)**

(74) Representative: **Powell, Timothy John
Potter Clarkson LLP
The Belgrave Centre
Talbot Street
Nottingham NG1 5GG (GB)**

(56) References cited:
**EP-A- 1 130 872**

• **KAPSEOK CHANG ET AL: "QoS-based adaptive scheduling for a mixed service in HDR system" PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, vol. 4, 15 September 2002 (2002-09-15), pages 1914-1918, XP010611598 ISBN: 0-7803-7589-0**

**Description**

## BACKGROUND OF THE INVENTION

### (a) Field of the Invention

The present invention relates to a system and method for downlink packet scheduling in a mobile communication system, and a recording medium storing a program therefor. More particularly, the present invention relates to a system and method for downlink packet scheduling in a mobile communication system in which real-time video traffic is given priority for processing, and multimedia traffic is serviced at the same time.

### (b) Description of the Related Art

The performance of a downlink packet scheduling algorithm for a mobile communication system affects the overall performance of the system. Accordingly, new downlink packet scheduling algorithms must be able to support multimedia traffic having a different QoS (quality of service). Further, downlink packet scheduling algorithms, while using limited resources, must be able to simultaneously service real-time packet traffic and non-realtime packet traffic, and minimize delay with respect to real-time traffic and increase productivity with respect to non-realtime traffic.

Conventional downlink packet scheduling algorithms use an M-LWDF algorithm to ensure multimedia traffic delay and processing rate performance. The M-LWDF algorithm defines a delay QoS request of a user i as in the following Equation 1.

## [Equation 1]

$$ \Pr\{W_i > T_i\} \le \delta_i $$

where $W_i$ is a packet delay for a user i, $T_i$ is a delay reference value, and $\delta_i$ is a maximum probability to exceed $T_i$. When the user is a real-time packet user, it is necessary that most delays for data packets be maintained at below a specific reference value.

The M-LWDF algorithm performs priority service to the user having the largest value as obtained through Equation 2 below.

## [Equation 2]

$$ s = \arg\max_i\left( a_i W_i \frac{r_i(t)}{\bar{r}_i} \right) $$

where $a_i$ is $-(\log\delta_i)/T_i$, and $\bar{r}_i$ is an average channel rate of user i.

In real-time video packets, individual delay of packets in a specific identical buffering window is unimportant, and buffering window delay affects system performance. Accordingly, the conventional downlink packet scheduling algorithm does not fully utilize the characteristics of video packets having the buffering window concept.

The document "QoS-Based Adaptive Scheduling for a Mixed Service in HDR System", Kapseok Chang et al, Indoor and Mobile Radio Communications 2002, the 13th International Symposium Sept. 15-18 2002, Piscataway, NJ, USA, IEEE, vol. 4, 15 September 2002, Pages 1914-1918, XP010611598 ISBN: 0-7803-7589-0 discloses a system for downlink packet scheduling in a mobile communication system comprising parallel buffers for real-time and non-real-time traffic and a packet scheduler providing priority to real-time traffic.

Notwithstanding this disclosure there remains a need for improvements in the efficiency of downlink packet scheduling of real-time and non-real-time traffic.

## SUMMARY OF THE INVENTION

It is an advantage of the present invention to provide a system and method for downlink packet scheduling in a mobile communication system, and a recording medium storing a program of the method, in which packet service is performed by varying the order of priority of users in an equitable manner such that buffering delay of real-time video traffic is reduced, and the processing rate of non-realtime Internet traffic is increased.

The method for downlink packet scheduling in a mobile communication system includes inputting real-time video traffic and non-realtime Internet traffic included in multimedia traffic into a packet scheduler positioned in a base station; providing service priority in input real-time video traffic, and performing packet scheduling of the real-time video traffic using a signal-to-interference ratio and an accumulation counter. The method is characterised by discarding packets having a buffering window delay exceeding a predetermined reference value, the discarding of packets being performed during the packet scheduling of the real-time video traffic; and performing packet scheduling of the non-realtime Internet traffic using a signal-to-interference ratio in the case where there is no real-time video traffic to be serviced.

The real-time video traffic is stored in real-time data buffers such that the real-time video traffic is generated in parallel and corresponding to the number of users, and the non-realtime video traffic is stored in non-realtime data buffers such that the non-realtime video traffic is generated in parallel and corresponding to the number of users.

The performing of packet scheduling of the real-time video traffic is realized by scheduling based on the product of a value obtained by dividing the signal-to-interference ratio in a scheduling renewal time t of the real-time video traffic by an average signal-to-interference ratio, and an accumulation counter.

The using of the accumulation counter is performed by calculating an accumulation counter $AC_i(t)$ in order to reduce buffering window delay in the real-time video traffic that is outside the buffering window.

The packet scheduler first services packets for users having the larger accumulation counter.

The scheduling includes performing service with respect to user j by as much as $C_j(t)$ in the case where a size $S_j(t)$ of packets that have not been processed before the scheduling renewal time t is larger than a size $C_j(t)$ of transmission data determined by a signal-to-interference ratio; and performing service by as much as $S_j(t)$ with respect to user j when $S_j(t)$ is smaller than $C_j(t)$, then performing scheduling on packets for users other than user j that has already been serviced.

The performing packet scheduling of the non-realtime Internet traffic is realized by scheduling based on a value obtained by dividing the signal-to-interference ratio in a scheduling renewal time t by an average signal-to-interference ratio.

The scheduling includes performing service with respect to user k by as much as $C_k(t)$ in the case where all the real-time video traffic is serviced, and if a size $S_k(t)$ of packets that have not been processed before the scheduling renewal time t is larger than a size $C_k(t)$ of transmission data determined by a signal-to-interference ratio; and performing service by as much as $S_k(t)$ with respect to user k when $S_k(t)$ is smaller than $C_k(t)$, then performing scheduling on packets for users other than user k that has already been serviced.

The scheduling is performed within a range where a number $N_{OVSF}$ of an OVSF (orthogonal variable spreading factor) code is from 0 to a maximum value, and if $N_{OVSF}$ exceeds the maximum value, scheduling is discontinued.

In a second aspect to the invention there is provided a system for downlink packet scheduling in a mobile communication system includes an m number of real-time data buffers divided for each user such that real-time video traffic for m users, among multimedia traffic, is generated in parallel corresponding to the number of users and is able to be stored; an n number of non-realtime data buffers divided for each user such that non-realtime Internet traffic for n users, among multimedia traffic, is generated in parallel corresponding to the number of users and is able to be stored; and a packet scheduler performing scheduling by providing service priority to the real-time video traffic stored in the real-time data buffers, then performing service with respect to the non-realtime Internet traffic characterised in that
the packet scheduler discards during packet scheduling of the real-time video traffic packets having a buffering window delay exceeding a predetermined reference value; and
the packet scheduler performs packet scheduling of the non-real-time Internet traffic using a signal-to-interference ratio in the case there is no real-time video to be serviced..

The packet scheduler performs scheduling based on an accumulation counter of input traffic. The accumulation counter is used to reduce buffering window delay in real-time video traffic that is outside the buffering window.

The packet scheduler performs scheduling of the real-time video traffic based on the product of a value obtained by dividing the signal-to-interference ratio in a scheduling renewal time t of the real-time video traffic by an average signal-to-interference ratio, and an accumulation counter. Following servicing of the real-time video traffic, scheduling of the non-realtime Internet traffic is performed based on a value obtained by dividing the signal-to-interference ratio in the scheduling renewal time t by the average signal-to-interference ratio.

The recording medium storing a program includes a function for inputting real-time video traffic and non-realtime Internet traffic included in multimedia traffic into a packet scheduler positioned in a base station; a function for providing service priority in input real-time video traffic, and performing packet scheduling of the real-time video traffic using a signal-to-interference ratio and an accumulation counter; a function for discarding packets having a buffering window delay exceeding a predetermined reference value, the discarding of packets being performed during the packet scheduling of the real-time video traffic; and a function for performing packet scheduling of the non-realtime Internet traffic using a signal-to-interference ratio in the case where there is no real-time video traffic to be serviced.

## BRIEF DESCRIPTION OF THE DRAWINGS

The accompanying drawings, which are incorporated in and constitute a part of the specification, illustrate an embodiment of the invention, and, together with the description, serve to explain the principles of the invention.

FIG. 1 is a drawing used to describe a mechanism for a downlink packet scheduling method for a mobile communication system according to an embodiment of the present invention.

FIG. 2 is a drawing illustrating a real-time video streaming session in a downlink packet scheduling method for a mobile communication system according to an embodiment of the present invention.

FIG. 3 is a schematic view of a non-realtime Internet traffic model in a downlink packet scheduling method for a mobile communication system according to an embodiment of the present invention.

FIG. 4 is a drawing used to describe an accumulation counting method for real-time video traffic according to an embodiment of the present invention.

FIG. 5 is a drawing used to describe the designation of a kth buffering window delay used in an embodiment of the present invention.

FIG. 6 is a drawing used to describe a packet discarding method according to an embodiment of the present invention.

FIG. 7 is a flow chart used to describe a downlink packet scheduling method in a mobile communication system according to an embodiment of the present invention.

## DETAILED DESCRIPTION OF THE PREFERRED EMBODIMENT

Embodiments of the present invention will now be described in detail with reference to the accompanying drawings.

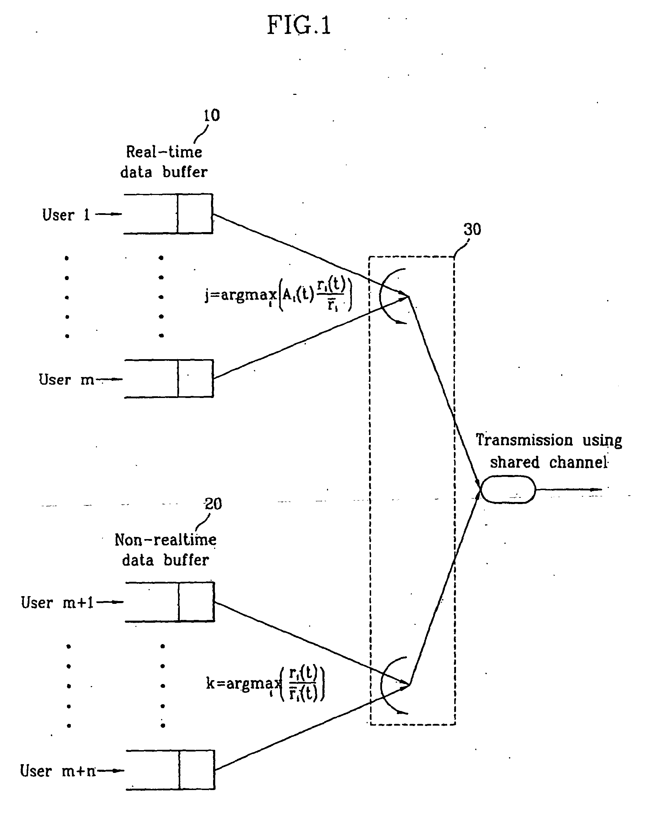

FIG. 1 is a drawing used to describe a mechanism for a downlink packet scheduling method for a mobile communication system according to an embodiment of the present invention.

As shown in the drawing, in the packet scheduling mechanism, it is assumed that m users are stacked in real-time data buffers 10, and, at the same time, n users are stored in non-realtime data buffers 20.

Real-time video traffic of m users is input and stored in the real-time data buffers 10 such that the real-time video traffic is generated in parallel and corresponding to the number of users. Further, non-realtime video traffic for n users is stored and increased in the non-realtime data buffers 20 such that the non-realtime video traffic is generated in parallel and corresponding to the number of users.

A packet scheduler 30 performs service by giving priority to real-time video packet traffic service. Only where there is no real-time video packet traffic to be serviced is the non-realtime Internet traffic serviced.

The real-time video traffic input to the packet scheduler 30 is sensitive to delay performance. Therefore, an accumulation counter is used to reduce buffering window delay in the case of traffic wherein the buffering window delay that digresses from the same buffering window affects the system rather than the individual delay of each packet in the same buffering window does.

Accordingly, in the case of real-time video traffic service, the packet scheduler 30 gives service priority to the user having the largest value determined using Equation 3 below, using values of the accumulation counter $(AC_i(t))$, $r_i(t)$, and $\bar{r_i}$.

**{Equation 3}**

$$s = \arg\max_i\left(AC_i\,\frac{r_i(t)}{\bar{r_i}}\right)$$

Further, in the case of non-realtime video traffic service, the packet scheduler 30 gives service priority to the user having the largest value determined using Equation 4 below, using values of $r_i(t)$, and $\bar{r_i}$.

**[Equation 4]**

$$s = \arg\max_i\left(\frac{r_i(t)}{\bar{r_i}}\right)$$

In Equations 3 and 4, $AC_i(t)$ is the $AC(t)$ of user i, $r_i(t)$ is a channel rate value in a renewal time t with respect to each user i, and $\bar{r_i}$ is an average channel rate.

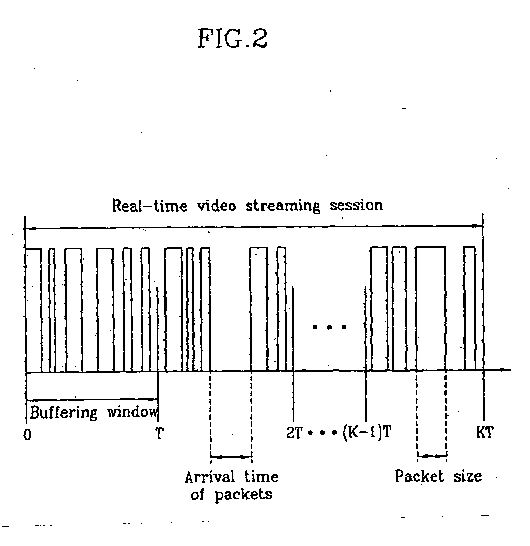

FIG. 2 is a drawing illustrating a real-time video streaming session in a downlink packet scheduling method for a mobile communication system according to an embodiment of the present invention.

In a real-time video streaming session, a predetermined interval T is designated in periods of a fixed frame. In the embodiment of the present invention, the interval T is designated in buffering window periods, and is used as the basis for delay performance with respect to real-time traffic.

The packet scheduler 30 receives the input of traffic from users, schedules the traffic, and outputs a scheduled packet data stream through a shared channel.

As shown in FIG. 2, each frame is structured as a fixed number of packets, and according to packet size and arrival times of the packets in one frame.

Since the video picture varies each time, the size of each packet has burst characteristics.

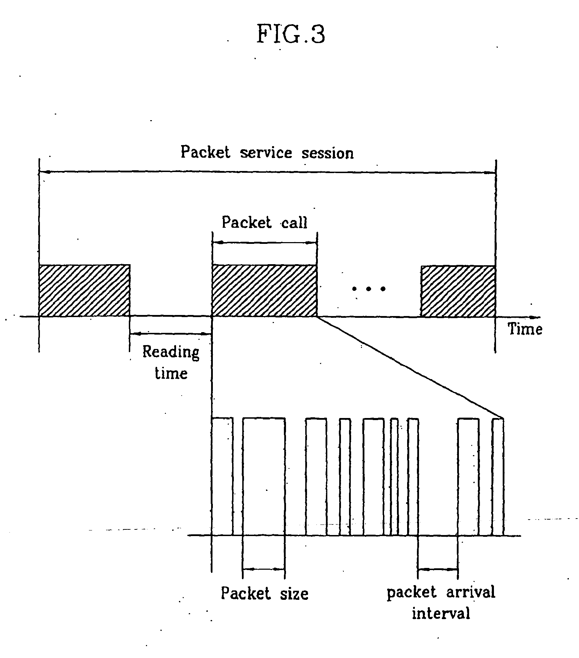

FIG. 3 is a schematic view of an non-realtime Internet traffic model in a downlink packet scheduling method for a mobile communication system according to an embodiment of the present invention.

As shown in the drawing, a non-realtime Internet traffic model is structured including packet service sessions, which are designated by time intervals of Internet use. Each session is realized through a plurality of packet calls. Further, each packet call includes a plurality of packets having burst characteristics.

Therefore, the non-realtime Internet traffic model is structured by one packet call that includes burst packets that are grouped together.

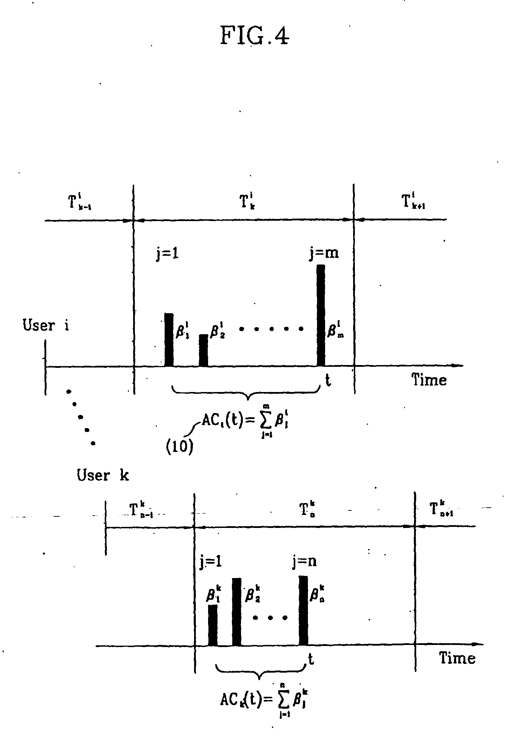

FIG. 4 is a drawing used to describe an accumulation counting method for real-time video traffic according to an embodiment of the present invention.

In FIG. 4, $T_k^i$ is a kth buffering window interval for a user i, and $\beta_m^i$ is an mth packet size for the user i.

For real-time video traffic, in a scheduling renewal time (t), the accumulation counter $AC_i(t)$ obtains the sum of packet sizes with respect to the user i accumulated from a starting time of $T_k^i$ to the scheduling renewal time t as indicated in Equation 5 below.

**[Equation 5]**

$$AC_i(t) = \sum_{j=1}^{M} \beta_j^i$$

When the packet arriving last is serviced, $AC_i(t)$ is reset, after which the sum of the arrived packets following $T_k^i$ is again obtained.

If $AC_i(t)$ with respect to user i is larger than $Ac_k(t)$ (where k=1,2,..,n, k≠1), the packet scheduler 30 first services an HOL (head of line) packet with respect to user i.

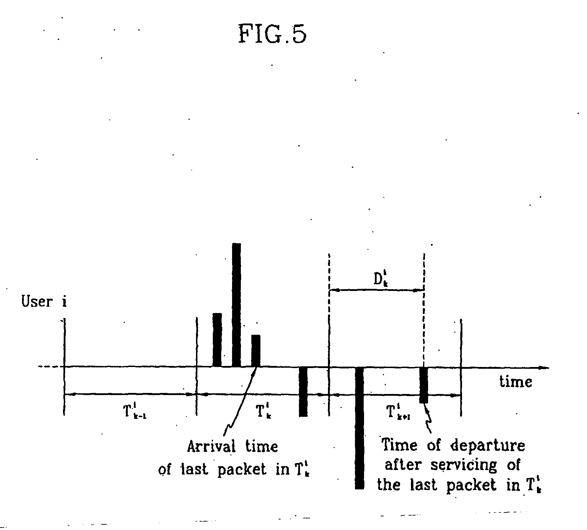

FIG. 5 is a drawing used to describe the designation of a kth buffering window delay used in an embodiment of the present invention.

In FIG. 5, $D_k^i$ is a kth buffering window delay for user i. $D_k^i$ is determined as the difference in times between the time for the last packet to arrive in $T_k^i$ to be serviced and depart the buffer, and the completion time of $T_k^i$

If the last packet to arrive in $T_k^i$ is serviced in $T_k^i$, then the value of $D_k^i$ becomes 0.

In order to calculate the value of $D_k^i$, it is necessary to distinguish between the last packets to arrive in the $T_k^i$ and newly arrived packets. $D_{tot}^i$ is a sum of delay values of all buffering windows from the start to the end of the session of user i, and $D_{av}^i$ is a value obtained by dividing the value $D_{tot}^i$ by the total number of all the buffering windows generated during the session of user i.

Equation 6 below is an equation designated with respect to a buffering window delay QoS request item in order to obtain the delay performance of the packet scheduler 30.

**[Equation 6]**

$$\Pr\left\{D_k^i > D^i\right\} \le \gamma^i$$

where $D_k^i$ is a delay value of a kth window with respect to user i, and $D^i$ and $\gamma^i$ are respectively a predetermined minimum delay reference value and an excess maximum probability value in the buffering window delay and for satisfying the buffering window delay QoS of each traffic.

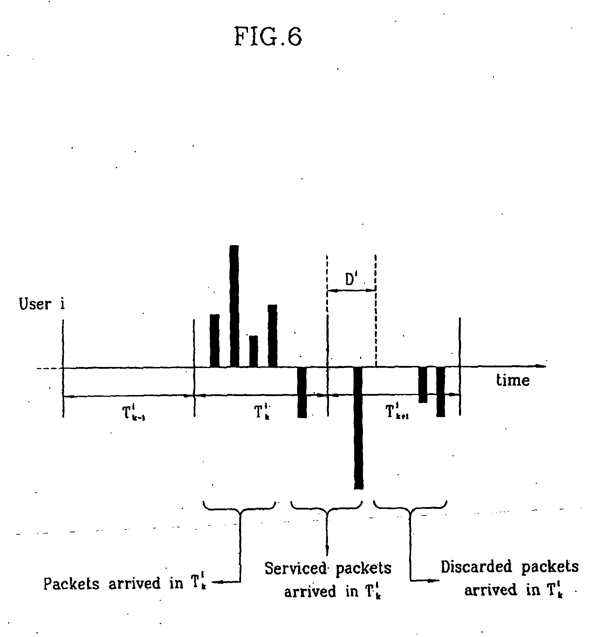

FIG. 6 is a drawing used to describe a packet discarding method according to an embodiment of the present invention.

As shown in FIG. 6, in the case of real-time video traffic, the packet scheduler 30 acts such that packets delayed by at least $D^i$, which is the designated time of buffering window delay, are discarded and the QoS request item related to the buffering window delay designated in Equation 6 is ensured, in the state of congestion.

The packet scheduler 30 calculates buffering window delays of all packets in the kth buffering window such that if there are packets that exceed the predetermined delay $D^i$, all packets in the kth buffering window of corresponding subsequently input packets are discarded.

Packet loss results when the inequality of Equa-

tion 7 occurs.

[Equation 7]

$$D_{k,j}^{i} > D^{i}$$

where $D_{k,j}^{i}$ is the difference in time between when a jth packet in a kth buffering window with respect to user i is input into the real-time data buffer 10, is serviced, and departs the real-time data buffer 10, to the completion time of $T_{k}^{i}$.

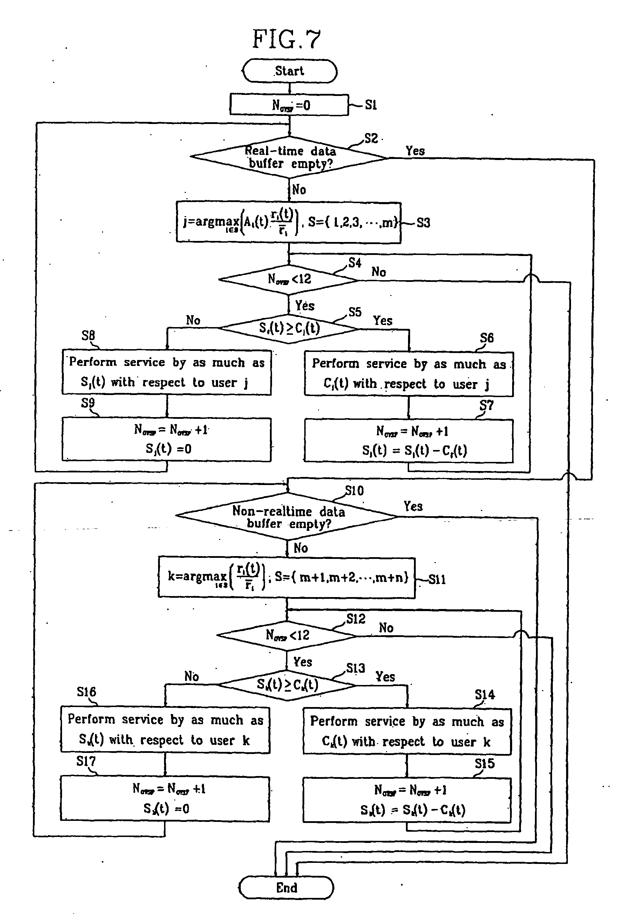

FIG. 7 is a flow chart used to describe a downlink packet scheduling method in a mobile communication system according to an embodiment of the present invention.

In a packet scheduling method according to an embodiment of the present invention, a number $N_{OVSF}$ of an OVSF (orthogonal variable spreading factor) code is initially set to 0 in step S1.

It is determined if real-time video traffic is stored in the real-time data buffer 10 in step S2. If this is the case, the packet scheduler 30 performs the calculation of Equation 3 with respect to HOL packets of user i sent from the base station, and performs service on the packet having the largest resulting value in step S3.

In this step, if $N_{OVSF}$ is greater than a maximum 12 as established in HSDPA (high speed downlink packet access) of the 3GPP (3rd Generation Partnership Project), scheduling operations are discontinued by the packet scheduler 30.

However, if $N_{OVSF}$ is smaller than 12 and larger than $S_j(t)$ and $C_j(t)$, service is performed by as much as $C_j(t)$ with respect to user j, and the value of $N_{OVSF}$ is incremented by 1 in steps S4, S5, S6, and S7.

Further, if $N_{OVSF}$ is smaller than 12, and smaller also than $S_j(t)$ and $C_j(t)$, service is performed by as much as $S_j(t)$ with respect to user j, and the value of $N_{OVSF}$ is incremented by 1 in steps S4, S5, S8, and S9.

Subsequently, a calculation using Equation 3 is again performed based on the product of a value obtained by dividing an SIR (signal-to-interference ratio) in a scheduling renewal time t with respect to all user packets (except the packet of user j that has already been serviced) by an average SIR, and an accumulation counter. Steps S4 through S9 are repeated for the user having the largest value resulting from this calculation.

In the above, $S_j(t)$ is the size of the packets that have not been processed before the scheduling renewal time t, and $C_j(t)$ is the size of transmission data obtained according to a transmission method that uses an SIR, which is channel information received from the terminals.

Using $S_j(t)$ and $C_j(t)$, data size transmitted to the terminal from the base station may vary for each terminal and each frame.

While performing the above packet scheduling operations, if there is no longer any real-time video traffic to be serviced such that the real-time data buffer 10 becomes empty, the packet scheduler 30 performs scheduling with respect to non-realtime Internet traffic users.

First, it is determined if non-realtime Internet traffic is stored in the non-realtime data buffer 20 in step S10. If it is, the packet scheduler 30 performs the calculation of Equation 4 with respect to HOL packets stored in the non-realtime data buffer 20 in step S11.

Equation 4 is used to perform scheduling based on a value obtained by dividing the SIR in the scheduling renewal time t with the average SIR, and service is performed on the packet having the largest resulting value.

Subsequently, as with real-time video traffic, if $N_{OVSF}$ is larger than 12 while performing the scheduling operations, the packet scheduler 30 discontinues the scheduling operations in step S12.

However, if $N_{OVSF}$ is smaller than 12, and larger than $S_k(t)$ and $C_k(t)$, service is performed by as much as $C_k(t)$ with respect to user k, and the value of $N_{OVSF}$ is incremented by 1 in steps S12, S13, S14, and S15.

Further, if $N_{OVSF}$ is smaller than 12, and smaller also than $S_k(t)$ and $C_k(t)$, service is performed by as much as $S_k(t)$ with respect to user k, and the value of $N_{OVSF}$ is incremented by 1 in steps S12, S13, S16, and S17.

Next, a calculation using Equation 4 is again performed in a scheduling renewal time t with respect to all user packets except the packet of user k that has already been serviced. Steps S4 through S9 are repeated for the user having the largest value resulting from this calculation.

In the above, the SIR received from the terminals is used to determine the service priority of users in the packet scheduler 30. However, the SIR may also be used in a modulation method and an encoding method for physical channels.

In the scheduling method using Equations 3 and 4 as described above, the packet scheduler 30 in the base station satisfies equitableness with respect to buffering window delay QoS request items of real-time video traffic, and also with respect to non-realtime Internet traffic users.

In the embodiment of the present invention, real-time video traffic is transmitted in real-time in a wireless channel environment, and the accumulation counter and SIR, which indicates channel environment, are considered.

Accordingly, compared to conventional methods, the present invention further reduces buffering window delay in the case of real-time video traffic. Further, in the case of non-realtime traffic, the present invention discards packets if the buffering window delay exceeds a predetermined value while performing packet scheduling with respect to real-time video traffic to thereby increase the processing rate of non-realtime Internet traffic for every frame.

In the system and method for downlink packet scheduling in a mobile communication system, the accumulation counter and SIR are considered in the case of real-time video traffic to perform scheduling, and the packets exceeding a predetermined buffering window delay are discarded such that the buffering window delay QoS request items and equitableness are satisfied.

Further, in the case of non-realtime Internet traffic, the system and method for downlink packet scheduling in a mobile communication system performs scheduling by considering SIRs to realize equity between users, and uses the packet discarding method in real-time video traffic. As a result, the processing rate of non-realtime Internet traffic is increased.

Finally, in the system and method for downlink packet scheduling in a mobile communication system, since only a time stamp and accumulation counter are used to calculate delays of packets for users, scheduling is easily performed.

Although embodiments of the present invention have been described in detail hereinabove, it should be clearly understood that many variations and/or modifications of the basic inventive concepts herein taught which may appear to those skilled in the present art will still fall within the scope of the present invention, as defined in the appended claims.

## Claims

1. A method for downlink packet scheduling in a mobile communication system, comprising:

   (a) inputting real-time video traffic and non-realtime Internet traffic included in multimedia traffic into a packet scheduler (30) positioned in a base station;
   (b) providing service priority in real-time video traffic from among traffic input in (a), and performing packet scheduling of the real-time video traffic using a signal-to-interference ratio and an accumulation counter, **characterised in that** the method includes:
   (c) discarding packets having a buffering window delay exceeding a predetermined reference value, the discarding of packets being performed during the packet scheduling of the real-time video traffic in (b); and
   (d) performing packet scheduling of the non-realtime Internet traffic using a signal-to-interference ratio in the case where there is no real-time video traffic to be serviced through (b) and (c).

2. The method of claim 1, wherein, in (a), the real-time video traffic is stored in real-time data buffers (10) such that the real-time video traffic is generated in parallel and corresponding to the number of users, and the non-realtime Interent traffic is stored in non-realtime data buffers (20) such that the non-realtime Internet traffic is generated in parallel and corresponding to the number of users.

3. The method of claim 1, wherein the performing packet scheduling of the real-time video traffic in (b) comprises scheduling based on the product of a value obtained by dividing the signal-to-interference ratio in a scheduling renewal time t of the real-time video traffic by an average signal-to-interference ratio, and an accumulation counter.

4. The method of claim 3, wherein, in (b), the using of the accumulation counter comprises calculating an accumulation counter $AC_i(t)$ in order to reduce buffering window delay in the real-time video traffic that is outside the buffering window.

5. The method of claim 3, wherein the packet scheduler (30) first services packets for users having the larger accumulation counter than other users.

6. The method of claim 3, wherein the scheduling comprises:

   performing service with respect to user j by as much as $C_j(t)$ in the case where a size $S_j(t)$ of packets that have not been processed before the scheduling renewal time t is larger than a size $C_j(t)$ of transmission data determined by a signal-to-interference ratio; and
   performing service by as much as $S_j(t)$ with respect to user j when $S_j(t)$ is smaller than $C_j(t)$, and performing scheduling on packets for users other than user j that has already been serviced.

7. The method of claim 1, wherein the performing packet scheduling of the non-realtime internet traffic in (d) comprises scheduling based on a value obtained by dividing the signal-to-interference ratio in a scheduling renewal time t by an average signal-to-interference ratio.

8. The method of claim 6, wherein the scheduling comprises:

   performing service with respect to user k by as much as $C_k(t)$ in the case where all the real-time video traffic is serviced, and if a size $S_k(t)$ of packets that have not been processed before the scheduling renewal time t is larger than a size $C_k(t)$ of transmission data determined by a signal-to-interference ratio; and
   performing service by as much as $S_k(t)$ with re-

spect to user k when $S_k(t)$ is smaller than $C_k(t)$, and performing scheduling on packets for users other than user k that has already been serviced.

9. The method of claim 1, wherein, in (b) and (d), the packet scheduling is performed within a range where a number $N_{OVSF}$ of an OVSF (orthogonal variable spreading factor) code is from 0 to a maximum value, and if $N_{OVSF}$ exceeds the maximum value, scheduling is discontinued.

10. A system for downlink packet scheduling in a mobile communication system, comprising:

an m number of real-time data buffers (10) divided for each user such that real-time video traffic for m users, among multimedia traffic, is generated in parallel corresponding to the number of users and is able to be stored;
an n number of non-realtime data buffers (20) divided for each user such that non-realtime Internet traffic for n users, among multimedia traffic, is generated in parallel corresponding to the number of users and is able to be stored; and
a packet scheduler (30) performing scheduling by providing service priority to the real-time video traffic stored in the real-time data buffers, then performing service with respect to the non-realtime Internet traffic,
**characterised in that**
the packet scheduler (30) discards during packet scheduling of the real-time video traffic packets having a buffering window delay exceeding a predetermined reference value; and
the packet scheduler (30) performs packet scheduling of the non-real-time Internet traffic using a signal-to-interference ratio in the case there is no real-time video to be serviced.

11. The system of claim 10, wherein the packet scheduler (30) performs scheduling based on an accumulation counter of input traffic.

12. The system of claim 11, wherein the accumulation counter is used to reduce buffering window delay in real-time video traffic that is outside the buffering window.

13. The system of claim 10, wherein the packet scheduler (30) performs scheduling of the real-time video traffic based on the product of a value obtained by dividing the signal-to-interference ratio in a scheduling renewal time t of the real-time video traffic by an average signal-to-interference ratio, and an accumulation counter, and
wherein, following servicing of the real-time video traffic, scheduling of the non-realtime Internet traffic is performed based on a value obtained by dividing the signal-to-interference ratio in the scheduling renewal time t by the average signal-to-interference ratio.

14. A recording medium storing a program comprising functions for:

inputting real-time video traffic and non-realtime Internet traffic included in multimedia traffic into a packet scheduler (30) positioned in a base station;
providing service priority in input real-time video traffic, and performing packet scheduling of the real-time video traffic using a signal-to-interference ratio and an accumulation counter;
discarding packets having a buffering window delay exceeding a predetermined reference value, the discarding of packets being performed during the packet scheduling of the real-time video traffic; and
performing packet scheduling of the non-realtime Internet traffic using a signal-to-interference ratio in the case where there is no real-time video traffic to be serviced.

**Patentansprüche**

1. Verfahren zur Paketplanung für die Abwärtsrichtung in einem mobilen Kommunikationssystem, aufweisend:

(a) Eingeben eines Echtzeit-Videoverkehrs und eines Nicht-Echtzeit-Internetverkehrs, die in einem Multimediaverkehr enthalten sind, in einen Paketplaner (30), der in einer Basisstation angeordnet ist;
(b) Bereitstellen einer Dienstpriorität in dem Echtzeit-Videoverkehr unter der Verkehrseingabe in (a), und Durchführen einer Paketplanung des Echtzeit-Videoverkehrs unter Verwendung eines Signal-zu-Überlagerungs-Verhältnisses und eines Akkumulationszählers, **dadurch gekennzeichnet, dass** das Verfahren umfasst:
(c) Verwerfen von Paketen mit einer Pufferfensterverzögerung, die einen vorbestimmten Bezugswert übersteigt, wobei das Verwerfen der Pakete während der Paketplanung des Echtzeit-Videoverkehrs in (b) durchgeführt wird; und
(d) Durchführen einer Paketplanung des Nicht-Echtzeit-Internetverkehrs unter Verwendung eines Signal-zu-Überlagerungs-Verhältnisses für den Fall, dass kein Echtzeit-Videoverkehr durch (b) und (c) zu bedienen ist.

2. Verfahren nach Anspruch 1, wobei in (a) der Echtzeit-Videoverkehr in Echtzeit-Datenpuffern (10) derart gespeichert wird, dass der Echtzeit-Videoverkehr parallel und entsprechend der Anzahl von Nutzern erzeugt wird, und der Nicht-Echtzeit-Internetverkehr in Nicht-Echtzeit-Datenpuffern (20) derart gespeichert wird, dass der Nicht-Echtzeit-Internetverkehr parallel und entsprechend der Anzahl von Nutzern erzeugt wird.

3. Verfahren nach Anspruch 1, wobei das Durchführen einer Paketplanung des Echtzeit-Videoverkehrs in (b) ein Planen basierend auf dem Produkt eines Werts, der durch Teilen des Signal-zu-Überlagerungs-Verhältnisses zu einer Planungsregenerationszeit t des Echtzeit-Videoverkehrs durch ein mittleres Signal-zu-Überlagerungsverhältnis erhalten wird, und eines Akkumulationszählers aufweist.

4. Verfahren nach Anspruch 3, wobei in (b) das Verwenden des Akkumulationszählers ein Berechnen eines Akkumulationszählers $AC_i(t)$ aufweist, um eine Pufferfensterverzögerung in dem Echtzeit-Videoverkehr, der außerhalb des Pufferfensters liegt, zu verringern.

5. Verfahren nach Anspruch 3, wobei der Paketplaner (30) zunächst Pakete für Nutzer bedient, die einen größeren Akkumulationszähler als andere Nutzer aufweisen.

6. Verfahren nach Anspruch 3, wobei das Planen aufweist:

Durchführen eines Dienstes mit Bezug auf Nutzer j um so viel wie $C_j(t)$ für den Fall, dass eine Größe $S_j(t)$ von Paketen, die vor der Planungsregenerationszeit t nicht verarbeitet worden sind, größer als eine Größe $C_j(t)$ von Übertragungsdaten ist, die durch ein Signal-zu-ÜberlagerungsVerhältnis bestimmt ist; und Durchführen eines Dienstes um so viel wie $S_j(t)$ mit Bezug auf Nutzer j, wenn $S_j(t)$ kleiner als $C_j(t)$ ist, und Durchführen eines Planens bezüglich Pakete für Nutzer, die sich von Nutzer j, der bereits bedient worden ist, unterscheiden.

7. Verfahren nach Anspruch 1, wobei das Durchführen eines Paketplanens des Nicht-Echtzeit-Internetverkehrs in (d) ein Planen basierend auf einem Wert aufweist, der durch Teilen des Signal-zu-Überlagerungs-Verhältnisses zu einer Planungsregenerationszeit t durch ein mittleres Signal-zu-Überlagerungs-Verhältnis erhalten wird.

8. Verfahren nach Anspruch 6, wobei das Planen aufweist:

Durchführen eines Dienstes mit Bezug auf Nutzer k um so viel wie $C_k(t)$ für den Fall, dass der gesamte Echtzeit-Videoverkehr bedient ist, und falls eine Größe $S_k(t)$ von Paketen, die vor der Planungsregenerationszeit t nicht verarbeitet worden sind, größer als eine Größe $C_k(t)$ von Übertragungsdaten ist, die durch ein Signal-zu-ÜberlagerungsVerhältnis bestimmt sind; und Durchführen eines Dienstes um so viel wie $S_k(t)$ mit Bezug auf Nutzer k, wenn $S_k(t)$ kleiner als $C_k(t)$ ist, und Durchführen eines Planens bezüglich Pakete für Nutzer, die sich von Nutzer k, der bereits bedient worden ist, unterscheiden.

9. Verfahren nach Anspruch 1, wobei in (b) und (d) die Paketplanung innerhalb eines Bereichs durchgeführt wird, in welchem eine Anzahl $N_{OVSF}$ eines OVSF-Codes (OVSF: "Orthogonal Variable Spreading Factor"; orthogonaler variabler Spreizfaktor) zwischen 0 und einem maximalen Wert liegt, und falls $N_{OVSF}$ den maximalen Wert übersteigt, eine Planung abgebrochen wird.

10. System zur Paketplanung für die Abwärtsrichtung in einem mobilen Kommunikationssystem, aufweisend:

eine Anzahl m von Echtzeit-Datenpuffern (10), die für jeden Nutzer derart aufgeteilt ist, dass Echtzeit-Videoverkehr für m Nutzer unter Multimedia-Verkehr parallel entsprechend der Anzahl von Nutzern erzeugt wird und gespeichert werden kann;
eine Anzahl n von Nicht-Echtzeit-Datenpuffern (20), die für jeden Nutzer derart aufgeteilt ist, dass Nicht-Echtzeit-Internetverkehr für n Nutzer unter Multimedia-Verkehr parallel entsprechend der Anzahl von Nutzern erzeugt wird und gespeichert werden kann; und
einen Paketplaner (30), der eine Planung durchführt, indem eine Dienstpriorität dem in den Echtzeit-Datenpuffern gespeicherten Echtzeit-Videoverkehr bereitgestellt wird, und der dann einen Dienst mit Bezug auf den Nicht-Echtzeit-Internetverkehr durchführt,
**dadurch gekennzeichnet, dass**
der Paketplaner (30) während einer Paketplanung des Echtzeit-Videoverkehrs Pakete verwirft, die eine Pufferfensterverzögerung aufweisen, die einen vorbestimmten Bezugswert übersteigt; und
der Paketplaner (30) eine Paketplanung des Nicht-Echtzeit-Internetverkehrs unter Verwendung eines Signal-zu-Überlagerungs-Verhältnisses für den Fall durchführt, dass kein Echtzeit-Videoverkehr zu bedienen ist.

11. System nach Anspruch 10, wobei der Paketplaner (30) eine Planung basierend auf einem Akkumulationszähler eines Eingabeverkehrs durchführt.

**12.** System nach Anspruch 11, wobei der Akkumulationszähler verwendet wird, um eine Pufferfensterverzögerung in dem Echtzeit-Videoverkehr, der außerhalb des Pufferfensters liegt, zu verringern.

**13.** System nach Anspruch 10, wobei der Paketplaner (30) eine Planung des Echtzeit-Videoverkehrs basierend auf dem Produkt eines Werts, der durch Teilen des Signal-zu-Überlagerungs-Verhältnisses in einer Planungsregenerationszeit t des Echtzeit-Videoverkehrs durch ein mittleres Signal-zu-Überlagerungs-Verhältnis erhalten wird, und eines Akkumulationszählers durchführt, und wobei auf ein Bedienen des Echtzeit-Videoverkehrs folgend, eine Planung des Nicht-Echtzeit-Internetverkehrs durchgeführt wird, basierend auf einem Wert, der durch Teilen des Signal-zu-Überlagerungs-Verhältnisses zu der Planungsregenerationszeit t durch das mittlere Signal-zu-Überlagerungs-Verhältnis erhalten wird.

**14.** Aufzeichnungsmedium, das ein Programm speichert, das Funktionen aufweist zum:

Eingeben eines Echtzeit-Videoverkehrs und eines Nicht-Echtzeit-Internetverkehrs, die in einem Multimedia-Verkehr enthalten sind, in einen Paketplaner (30), der in einer Basisstation angeordnet ist;
Bereitstellen einer Dienstpriorität in dem eingeben Echtzeit-Videoverkehr, und Durchführen einer Paketplanung des Echtzeit-Videoverkehrs unter Verwendung eines Signal-zu-Überlagerungs-Verhältnisses und eines Akkumulationszählers;
Verwerfen von Paketen, die eine Pufferfensterverzögerung aufweisen, die einen vorbestimmten Bezugswert übersteigt, wobei das Verwerfen der Pakete während der Paketplanung des Echtzeit-Videoverkehrs durchgeführt wird; und
Durchführen einer Paketplanung des Nicht-Echtzeit-Internetverkehrs unter Verwendung eines Signal-zu-Überlagerungs-Verhältnisses für den Fall, dass kein Echtzeit-Videoverkehr zu bedienen ist.

**Revendications**

**1.** Procédé d'ordonnancement de paquets en liaison descendante dans un système de communication mobile, comprenant :

(a) l'entrée de trafic vidéo en temps réel et de trafic Internet en temps non réel inclus dans le trafic multimédia dans un ordonnanceur de paquets (30) positionné dans une station de base ;
(b) la fourniture d'une priorité de service dans un trafic vidéo en temps réel parmi l'entrée de trafic en (a), et la réalisation d'un ordonnancement de paquets du trafic vidéo en temps réel en utilisant un rapport signal/brouillage et un compteur d'accumulation, **caractérisé en ce que** le procédé inclut :
(c) l'abandon de paquets ayant un retard de fenêtre de mise en mémoire tampon excédant une valeur de référence prédéterminée, l'abandon de paquets étant réalisé pendant l'ordonnancement de paquets du trafic vidéo en temps réel en (b) ; et
(d) la réalisation d'un ordonnancement de paquets du trafic Internet en temps non réel en utilisant un rapport signal/brouillage, dans le cas où il n'y a pas de trafic vidéo en temps réel à desservir à travers (b) et (c).

**2.** Procédé selon la revendication 1, dans lequel dans (a), le trafic vidéo en temps réel est stocké dans des mémoires tampons de données en temps réel (10) de telle sorte que le trafic vidéo en temps réel est généré en parallèle et correspondant au nombre d'utilisateurs, et le trafic Internet en temps non réel est stocké dans des mémoires tampons de données non-temps réel (20) de telle sorte que le trafic Internet en temps non réel est généré en parallèle et correspondant au nombre d'utilisateurs.

**3.** Procédé selon la revendication 1, dans lequel la réalisation de l'ordonnancement de paquets du trafic vidéo en temps réel dans (b) comprend l'ordonnancement basé sur le produit d'une valeur obtenue en divisant le rapport signal/brouillage dans un temps de renouvellement d'ordonnancement t du trafic vidéo en temps réel par un rapport signal/brouillage moyen, et un compteur d'accumulation.

**4.** Procédé selon la revendication 3, dans lequel, dans (b), l'utilisation du compteur d'accumulation comprend le calcul d'un compteur d'accumulation $AC_i(t)$ afin de réduire le retard de fenêtre de mise en mémoire tampon dans le trafic vidéo en temps réel qui est à l'extérieur de la fenêtre de mise en mémoire tampon.

**5.** Procédé selon la revendication 3, dans lequel l'ordonnanceur de paquets (30) dessert tout d'abord des paquets pour des utilisateurs ayant un compteur d'accumulation plus grand que d'autres utilisateurs.

**6.** Procédé selon la revendication 3, dans lequel l'ordonnancement comprend :

la réalisation d'un service relatif à l'utilisateur j d'autant que $C_j(t)$ dans le cas où une taille $S_j(t)$ de paquets n'ayant pas été traités avant le temps de renouvellement d'ordonnancement t est plus grande qu'une taille $C_j(t)$ de données de transmission déterminée par un rapport signal/brouillage ; et

la réalisation d'un service d'autant que $S_j(t)$ relatif à l'utilisateur j lorsque $S_j(t)$ est plus petit que $C_j(t)$, et la réalisation d'un ordonnancement sur des paquets pour des utilisateurs autres que l'utilisateur j qui a déjà été desservi.

**7.** Procédé selon la revendication 1, dans lequel la réalisation de l'ordonnancement de paquets du trafic Internet en temps non réel dans (d) comprend l'ordonnancement basé sur une valeur obtenue en divisant le rapport signal/brouillage dans un temps de renouvellement d'ordonnancement t par un rapport signal/brouillage moyen.

**8.** Procédé selon la revendication 6, dans lequel l'ordonnancement comprend :

la réalisation d'un service relatif à l'utilisateur k d'autant que $C_k(t)$ dans le cas où tout le trafic vidéo en temps réel est desservi, et si une taille $S_k(t)$ de paquets qui n'ont pas été traités avant le temps de renouvellement d'ordonnancement t est plus grande qu'une taille $C_k(t)$ de données de transmission déterminées par un rapport signal/brouillage ; et

la réalisation d'un service d'autant que $S_k(t)$ relatif à l'utilisateur k lorsque $S_k(t)$ est plus petit que $C_k(t)$, et la réalisation d'un ordonnancement sur des paquets pour des utilisateurs autres que l'utilisateur k qui a déjà été desservi.

**9.** Procédé selon la revendication 1, dans lequel, dans (b) et (d), l'ordonnancement de paquets est réalisé dans une plage où un nombre $N_{OVSF}$ d'un code OVSF (facteur d'étalement variable orthogonal) est de 0 à une valeur maximale, et si $N_{OVSF}$ excède la valeur maximale, l'ordonnancement est interrompu.

**10.** Système d'ordonnancement de paquets en liaison descendante dans un système de communication mobile, comprenant :

un nombre m de mémoires tampons de données en temps réel (10) divisé pour chaque utilisateur de telle sorte qu'un trafic vidéo en temps réel pour m utilisateurs, parmi le trafic multimédia, est généré en parallèle correspondant au nombre d'utilisateurs et est capable d'être stocké ;

un nombre n de mémoire tampon de données en temps non réel (20) divisé pour chaque utilisateur de telle sorte qu'un trafic Internet en temps non réel pour n utilisateurs, parmi le trafic multimédia, est généré en parallèle correspondant au nombre d'utilisateurs et est capable d'être stocké ; et

un ordonnanceur de paquets (30) réalisant un ordonnancement en fournissant une priorité de service au trafic vidéo en temps réel stocké dans les mémoires tampons de données en temps réel, puis la réalisation d'un service relatif au trafic Internet en temps non réel, **caractérisé en ce que**

l'ordonnanceur de paquets (30) abandonne pendant l'ordonnancement de paquets du trafic vidéo en temps réel des paquets ayant un retard de fenêtre de mise en mémoire tampon excédant une valeur de référence prédéterminée ; et l'ordonnanceur de paquets (30) réalise un ordonnancement de paquets du trafic Internet en temps non réel en utilisant un rapport signal/brouillage dans le cas où il n'y a pas de vidéo en temps réel à desservir.

**11.** Système selon la revendication 10, dans lequel l'ordonnanceur de paquets (30) réalise un ordonnancement en se basant sur un compteur d'accumulation de trafic d'entrée.

**12.** Système selon la revendication 11, dans lequel le compteur d'accumulation est utilisé pour réduire le retard de fenêtre de mise en mémoire tampon dans le trafic vidéo en temps réel qui est à l'extérieur de la fenêtre de mise en mémoire tampon.

**13.** Système selon la revendication 10, dans lequel l'ordonnanceur de paquets (30) réalise un ordonnancement du trafic vidéo en temps réel basé sur le produit d'une valeur obtenue en divisant le rapport signal/brouillage dans un temps de renouvellement d'ordonnancement t du trafic vidéo en temps réel par un rapport signal/brouillage moyen, et un compteur d'accumulation, et

dans lequel, après desserte du trafic vidéo en temps réel, l'ordonnancement du trafic Internet en temps non réel est réalisé sur la base d'une valeur obtenue en divisant le rapport signal/brouillage dans le temps de renouvellement d'ordonnancement t par le rapport signal/brouillage moyen.

**14.** Support d'enregistrement stockant un programme comprenant des fonctions pour :

l'entrée de trafic vidéo en temps réel et de trafic Internet en temps non réel inclus dans le trafic multimédia dans un ordonnanceur de paquets (30) positionné dans une station de base ;

la fourniture d'une priorité de service dans un trafic vidéo en temps réel d'entrée, et la réalisation d'un ordonnancement de paquets du trafic vidéo en temps réel en utilisant un rapport signal/brouillage et un compteur d'accumulation ;

l'abandon de paquets ayant un retard de fenêtre de mise en mémoire tampon excédant une valeur de référence prédéterminée, l'abandon de paquets étant réalisé pendant l'ordonnancement de paquets du trafic vidéo en temps réel ; et

la réalisation d'un ordonnancement de paquets du trafic Internet en temps non réel en utilisant un rapport signal/brouillage dans le cas où il n'y a aucun trafic vidéo en temps réel à desservir.

# FIG.1

Real-time
data buffer $\underset{10}{}$

User 1

$j = \underset{i}{\operatorname{argmax}}\left( A_i(t)\dfrac{r_i(t)}{\overline{r}_i} \right)$

User m

Non-realtime
data buffer $\underset{20}{}$

User m+1

$k = \underset{i}{\operatorname{argmax}}\left( \dfrac{r_i(t)}{\overline{r}_i(t)} \right)$

User m+n

Transmission using
shared channel

# FIG.2

Real-time video streaming session

Buffering window

0    T    2T ··· (K-1)T    KT

Arrival time
of packets

Packet size

## FIG.3

Packet service session

Packet call

Reading time

Time

Packet size

packet arrival interval

# FIG.4

$$AC_i(t) = \sum_{j=1}^{m} \beta_j^i$$

(10)

$$AC_k(t) = \sum_{j=1}^{n} \beta_j^k$$

# FIG.5

User i

$D_k^i$

time

$T_{k-1}^i$

$T_k^i$

Arrival time
of last packet in $T_k^i$

$T_{k+1}^i$

Time of departure
after servicing of
the last packet in $T_k^i$

# FIG.6

User i

$D^i$

time

$T^i_{k-1}$  $T^i_k$  $T^i_{k+1}$

Packets arrived in $T^i_k$

Serviced packets arrived in $T^i_k$

Discarded packets arrived in $T^i_k$

# FIG.7

Start

$N_{OVSF} = 0$ —— S1

Real-time data buffer empty? —— S2
→ Yes

↓ No

$j = \underset{i \in S}{\arg\max}\left(A_i(t) \cdot \dfrac{r_i(t)}{\overline{r_i}}\right),\ S = \{1,2,3,\cdots,m\}$ —— S3

$N_{OVSF} < 12$ —— S4 → No

↓ Yes

$S_i(t) \geq C_i(t)$ —— S5

No ↓ (S8)       Yes → (S6)

**S8**
Perform service by as much as $S_i(t)$ with respect to user j

**S6**
Perform service by as much as $C_i(t)$ with respect to user j

**S9**
$N_{OVSF} = N_{OVSF} + 1$
$S_i(t) = 0$

**S7**
$N_{OVSF} = N_{OVSF} + 1$
$S_i(t) = S_i(t) - C_i(t)$

Non-realtime data buffer empty? —— S10
→ Yes

↓ No

$k = \underset{i \in S}{\arg\max}\left(\dfrac{r_i(t)}{\overline{r_i}}\right);\ S = \{m+1, m+2, \cdots, m+n\}$ —— S11

$N_{OVSF} < 12$ —— S12 → No

↓ Yes

$S_i(t) \geq C_i(t)$ —— S13

No ↓ (S16)       Yes → (S14)

**S16**
Perform service by as much as $S_i(t)$ with respect to user k

**S14**
Perform service by as much as $C_i(t)$ with respect to user k

**S17**
$N_{OVSF} = N_{OVSF} + 1$
$S_i(t) = 0$

**S15**
$N_{OVSF} = N_{OVSF} + 1$
$S_i(t) = S_i(t) - C_i(t)$

End

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KAPSEOK CHANG et al.** QoS-Based Adaptive Scheduling for a Mixed Service in HDR System. *Indoor and Mobile Radio Communications 2002, the 13th International Symposium,* 15 September 2002, vol. 4, ISBN 0-7803-7589-0, 1914-1918